Europäisches Patentamt

European Patent Office

Office européen des brevets

(19)

(11)  EP 0 720 007 B1

(12)  **EUROPÄISCHE PATENTSCHRIFT**

(45)  Veröffentlichungstag und Bekanntmachung des Hinweises auf die Patenterteilung:
**26.04.2000  Patentblatt 2000/17**

(51)  Int Cl.$^7$:  **G01L 23/22**

(21)  Anmeldenummer: **95120340.5**

(22)  Anmeldetag: **21.12.1995**

(54)  **Einrichtung zur Fehlererkennung bei einer Klopferkennung**

Device for fault recognition in a knock-detecting device

Système permettant de détecter des défauts dans un dispositif de détection de cognements

(84)  Benannte Vertragsstaaten:
**DE FR IT**

(30)  Priorität: **30.12.1994  DE 4447182**
**07.12.1995  DE 19545649**

(43)  Veröffentlichungstag der Anmeldung:
**03.07.1996  Patentblatt 1996/27**

(73)  Patentinhaber: **ROBERT BOSCH GMBH**
**70442 Stuttgart (DE)**

(72)  Erfinder:
• **Edelmann, Thomas, Dipl.-Ing. (FH)**
**D-74321 Bietigheim-Bissingen (DE)**
• **Hall, Udo, Dipl.-Ing (FH)**
**D-71277 Rutesheim (DE)**

(56)  Entgegenhaltungen:
**US-A- 4 385 607**        **US-A- 4 527 526**
**US-A- 5 144 929**

**Beschreibung**

Stand der Technik

Die Erfindung geht aus von einer Einrichtung zur Fehlererkennung bei einer Klopferkennungsschaltung nach der Gattung des Hauptanspruchs.

Es ist bekannt, daß bei Brennkraftmaschinen mit einer Klopfregelung der Klopfsensor, der die Klopferkennung ermöglicht, auf Funktionsfähigkeit überwacht werden muß. Es besteht ansonsten die Gefahr, daß bei Ausfall des Klopfsensors oder einer Komponente der zugehörigen Auswerteschaltung Klopfen nicht erkannt wird und der Arbeitspunkt der Brennkraftmaschine fehlerhaft in den klopfenden Bereich verschoben wird, was zu einer Gefährdung der Brennkraftmaschine selbst führen kann.

Es wird deshalb beispielsweise in der internationalen Patentanmeldung PCT/DE 94/01041, veröffentlicht am 30.03.1995 als WO-A-95/08760 bzw. DE-A-43 32 711, eine Einrichtung zur Fehlererkennung bei einer Vorrichtung der Klopferkennung bei einer Brennkraftmaschine vorgeschlagen, bei der die Ausgangssignale des Klopfsensors mit einem variablen Referenzpegel verglichen werden, der abhängig von den Ausgangssignalen des Klopfsensors gebildet wird. Überschreiten die Klopfsignale den Referenzpegel, multipliziert mit einem zylinderselektiven Klopferkennungsfaktor, wird Klopfen erkannt. Überschreitet der Referenzpegel, der so normiert wird, daß er mit größer werdendem Geräusch der Brennkraftmaschine anwächst, ein erlaubtes Referenzpegelband, wird ein Fehler erkannt, wobei die Fehlererkennung gegebenenfalls nur dann ausgelöst wird, wenn der Referenzpegel für eine bestimmte Zeit außerhalb des Referenzpegelbandes liegt.

Diese bekannte Einrichtung kann unter ungünstigen Umständen, nämlich bei einem starken Wechsel des Ausgangssignals des Klopfsensors bzw. einem starkem Last-oder Drehzahlwechsel, beispielsweise während Beschleunigungen irrtümlicherweise Fehler anzeigen, wenn der Referenzpegel dem anwachsenden Motorgeräusch zu schnell folgt also zu schnell erhöht wird (oder auch zu langsam folgt) und dadurch in unplausible Bereiche gerät.

Eine weitere Vorrichtung zur Erfassung der beim Klopfen einer Brennkraftmaschine auftretenden Schwingungen, bei der ebenfalls eine Fehlfunktion des Klopfsensors erkannt wird, ist aus der DE-PS 29 42 250 bekannt, bei dieser Vorrichtung findet während eines ersten Zeitintervalls, währenddessen Klopfen stattfinden kann, eine Klopferkennung statt. Während eines zweiten Zeitintervalles werden die Ausgangssignale des Klopfsensors mit einem Minimalpegel und/oder Maximalpegel verglichen, liegen die Klopfsignale in diesem Zeitintervall nicht im Bereich zwischen Minimalpegel und Maximalpegel, wird ein Fehler erkannt. Sowohl der Minimalpegel als auch der Maximalpegel ist dabei vom Lastzustand und Drehzahl zustand der Brennkraftmaschine abhängig. Aus der DE-PS 29 42 250 ist also eine Vorrichtung zur Klopferkennung einschließlich einer Fehlererkennung bekannt, bei der bei der Fehlererkennung der Lastzustand der Brennkraftmaschine mit berücksichtigt wird, wobei der Lastwert jedoch nur zur Festlegung der Schwellwerte verwendet wird, nicht zur Festlegung der Meßfenster.

Vorteile der Erfindung

Die erfindungsgemäße Einrichtung zur Fehlererkennung bei einer Klopferkennung mit den Merkmalen des Anspruchs 1 hat demgegenüber den Vorteil, daß die Fehlererkennung gegenüber dem Stand der Technik noch zuverlässiger und sicherer wird. Erzielt wird dieser Vorteil, indem während besonders kritischer Phasen beim Betrieb der Brennkraftmaschine, insbesonders während und für eine bestimmte Zeit nach Last- oder Drehzahldynamikphasen keine Klopfsensordiagnose stattfindet. Besonders vorteilhaft ist, daß die Diagnosefunktion während dieser kritischen Phase einfach ausgeblendet wird. Es müssen dabei keine Hardwareeingriffe in bereits vorhandene Systeme erfolgen, sondern es kann ausschließlich durch Einfügung eines entsprechenden Kriteriums in den im Steuergerät der Brennkraftmaschine ablaufenden Funktionsablauf eine erfindungsmäße Ausblendung erfolgen.

Weitere Vorteile der Erfindung werden mit Hilfe der in den Unteransprüchen angegebenen Maßnahmen erzielt. Diese Maßnahmen sind insbesondere die vorteilhafte Festlegung des Zeitintervalls, in dem die Ausblendung erfolgen soll, ausgehend von einem Zündungszähler. Weiterhin ist vorteilhaft, daß ausgehend vom Zählerstand eines Zündungszählers die Fehlerheilung durchgeführt wird und gegebenenfalls ausgeblendet wird und so fehlerhafte Heilungen vermieden werden.

Zeichnung

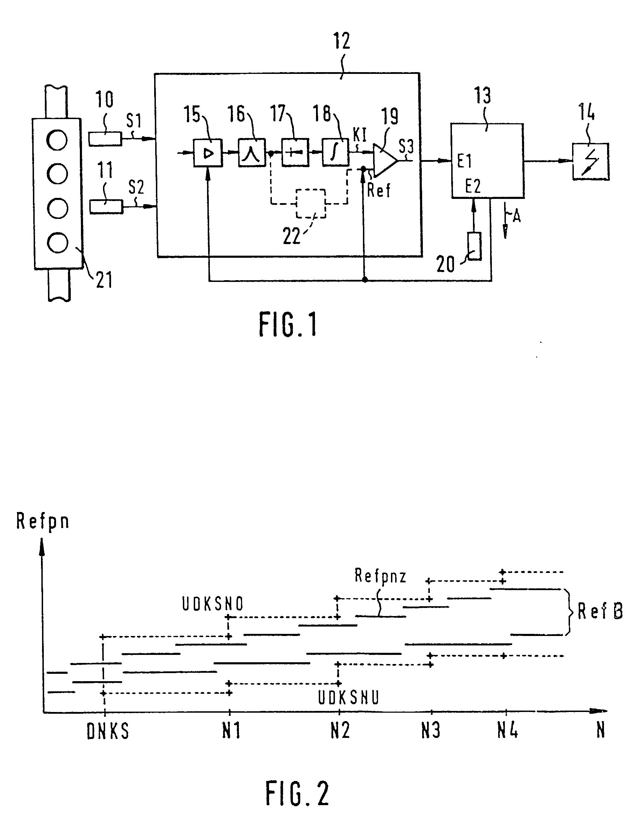

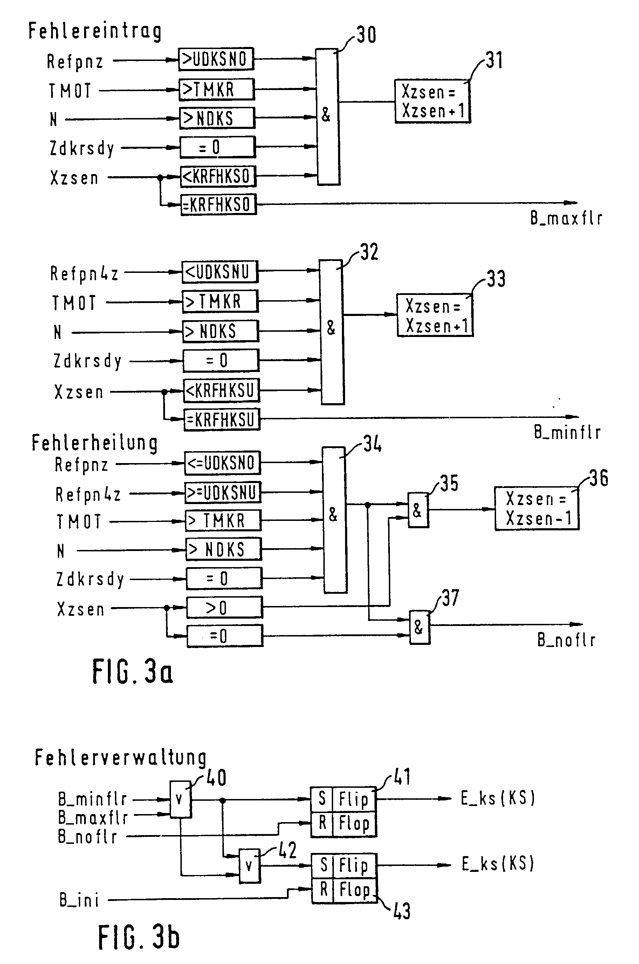

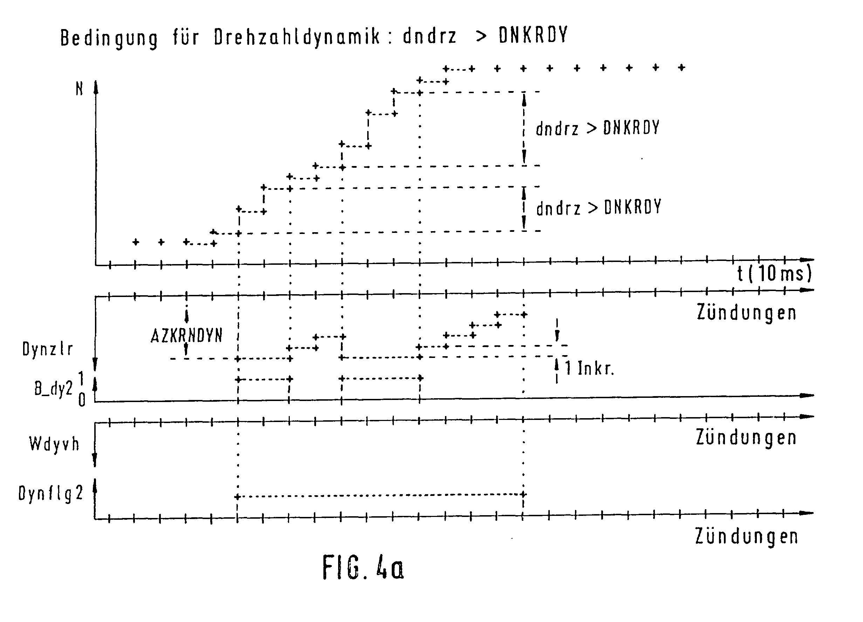

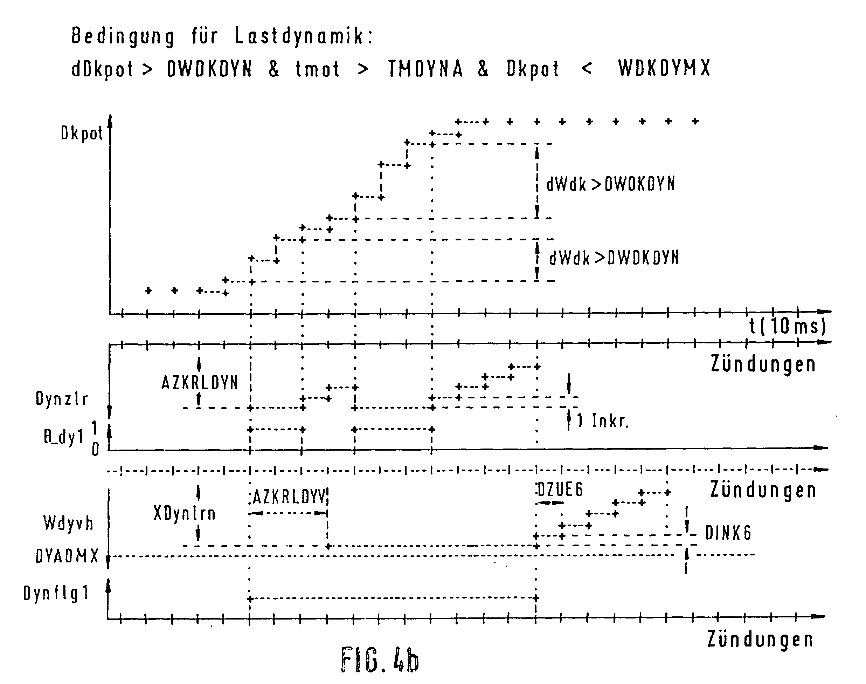

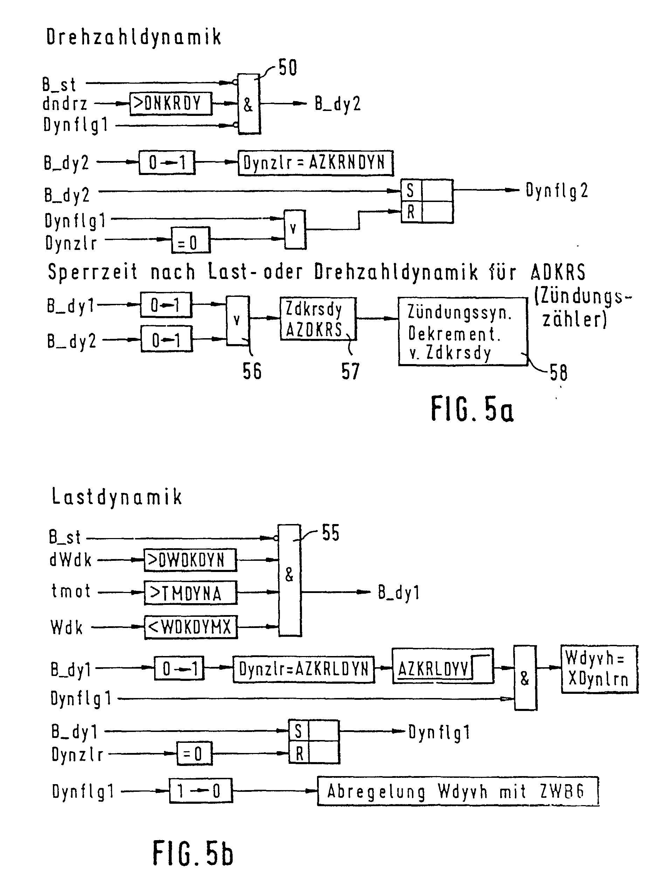

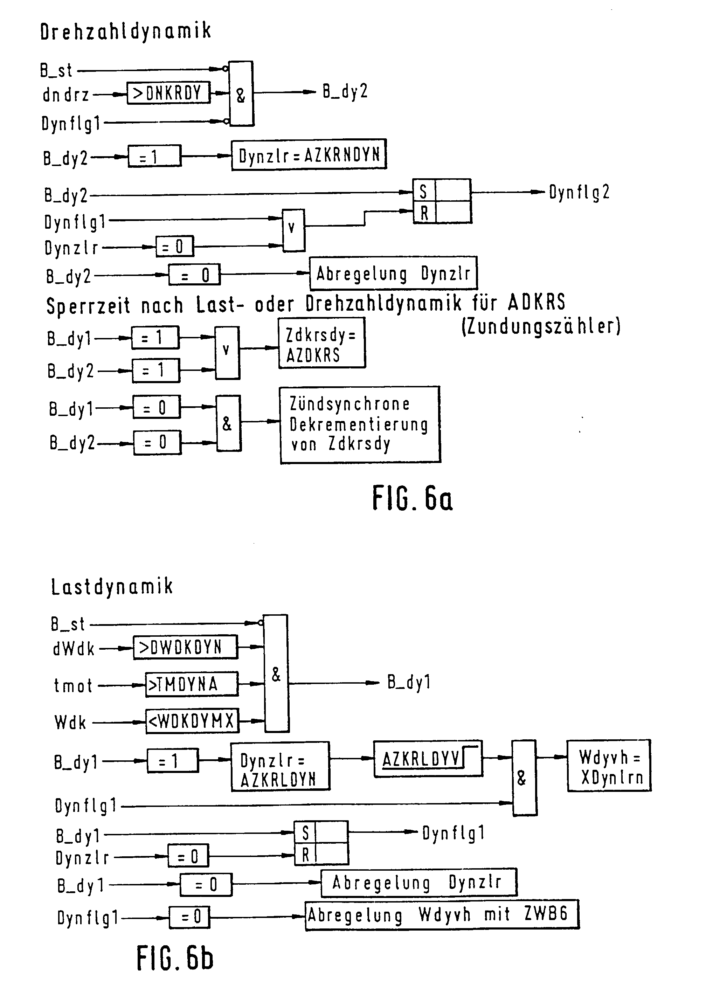

Die Erfindung ist in der Zeichnung dargestellt und wird in der nachfolgenden Beschreibung näher erläutert. Es zeigt dabei Figur 1 die schaltungsgemäße Ausgestaltung einer Vorrichtung zur Klopferkennung, in der die erfindungsgemäße Fehlererkennung ablaufen kann. Figur 2 zeigt einen Zusammenhang zwischen Referenzpegel und Drehzahl. Die Figuren 1 und 2 sind aus der internationalen Anmeldung PCT/DE 94/01041 bereits bekannt. In Figur 3a, b sind Blockschaltbilder angegeben, die die genaue Vorgehensweise bei der Fehlererkennung aufzeigen. In Figur 4a, b wird der Zusammenhang zwischen Drehzahländerung und Zeit bzw. zwischen Drehzahldynamik und Zündabstand verdeutlicht und Figur 5a, b sowie 6a, b zeigen weitere Blockschaltbilder, die die Bildung der Sperrzeit nach Last-oder Drehzahldynamik verdeutlicht.

Beschreibung

In dem in Figur 1 dargestellten Ausführungsbeispiel ist eine Vorrichtung zur Klopferkennung bei einer Brennkraftmaschine mit zwei Klopfsensoren 10, 11 dargestellt. Diese Klopfsensoren 10, 11 sind über eine Auswerteschaltung 12 mit dem Eingang E1 eines Mikrorechners 13 verbunden, der Bestandteil eines nicht näher dargestellten Steuergerätes ist.

Dem Mikrorechner 13 können über einen Eingang E2 weitere Signale zugeführt werden, die beispielsweise den Betriebszustand der Brennkraftmaschine charakterisieren und von geeigneten Sensoren 20 ermittelt werden. Ein solches Signal kann die Drehzahl n der Brennkraftmaschine sein, die mit einem Sensor gemessen wird. Der Mikrorechner 13 regelt in Abhängigkeit der Signale der Auswerteschaltung 12 sowie der weiteren Signale, die am Eingang E2 zugeführt werden, die Zündungsendstufe 14 der Brennkraftmaschine und/oder gegebenenfalls weitere Einrichtungen der Brennkraftmaschine, beispielsweise durch Abgabe entsprechender Signale am Ausgang A.

Der Mikrorechner 13 kann auch als diskrete Schaltung aufgebaut sein, genauso können die Auswerteschaltung 12 sowie der Mikrorechner 13 zu einer einzigen Recheneinrichtung zusammengefaßt sein, ihre Funktion kann beispielsweise mit Hilfe des Steuergerätes der Brennkraftmaschine realisiert werden.

Anstelle oder alternativ zur Beeinflussung des Zündzeitpunktes als Maßnahme zur Verlagerung des Arbeitspunktes der Brennkraftmaschine aus dem klopfenden Bereich heraus können auch die übrigen an sich bekannten Maßnahmen zur Beeinflussung des Klopfverhaltens einer Brennkraftmaschine herangezogen werden, beispielsweise die Anfettung des Verbrennungsgemisches, Zugabe von Mitteln zur Erreichung einer höheren Klopffestigkeit usw.

Die Auswerteschaltung 12 umfaßt im gewählten Ausführungsbeispiel wenigstens einen Verstärker 15 mit einstellbarem Verstärkungsfaktor, dem abwechslungsweise die von den Klopfsensoren 10, 11 gelieferten Ausgangssignale zugeführt werden. In einem sich anschließenden Bandpaß 16 werden die verstärkten Signale so gefiltert, daß die Signalanteile mit klopftypischen Frequenzen bevorzugt werden.

An den Bandpaß schließt sich eine Demodulationsschaltung 17, beispielsweise ein Gleichrichter an. Die von der Demodulationsschaltung abgegebenen Signale werden im Integrator 18 aufintegriert, die integrierten Signale KI werden an einen ersten Eingang des Komparators 19 weitergeleitet.

Dem anderen Eingang des Komparators 19 wird ein Referenzsignal bzw. ein Referenzpegel Ref zugeführt, das beispielsweise im Tiefpaß 22 durch Mittelung der Klopfsensorsignale mit großer Zeitkonstante gebildet wird. Die tatsächliche Höhe des Referenzsignales wird jedoch mit Hilfe des Mikrorechners 13 in Abhängigkeit von den Betriebszuständen der Brennkraftmaschine beeinflußt. Eine direkte Beeinflussung der Höhe der Ausgangssignale der Klopfsensoren 10, 11 ist ebenso möglich, indem der Regelverstärker 15 vom Mikrorechner 13 in geeigneter Weise angesteuert wird.

Der genaue Aufbau der einzelnen Elemente ist für das Verständnis der Erfindung nicht wesentlich und wird daher nicht näher angegeben. Ebenfalls nur symbolisch dargestellt ist die Brennkraftmaschine 21, der die Klopfsensoren 10 und 11 zugeordnet sind.

Mit Hilfe der in Figur 1 dargestellten Vorrichtung läuft die Klopferkennung wie folgt ab: Die Klopfsensoren 10, 11 registrieren die Geräusche, die von der Brennkraftmaschine 21 verursacht werden und geben entsprechende Signale Sl, S2 an die Auswerteschaltung 12 ab. Diese Signale werden in geeigneter Weise gefiltert und im Regelverstärker 15 verstärkt.

Die Ausgangssignale dieses Regelverstärkers 15 werden nach der Aufbereitung im Bandpaß 16, der Demodulatorschaltung 17 und dem Integrator 18 im Komparator 19 mit einem Referenzpegel Ref verglichen. Am Ausgang des Komparators 19 entsteht ein Signal S3, das erkennen läßt, ob Klopfen vorliegt oder nicht, dabei wird auf Klopfen erkannt, wenn das Ausgangssignal des Intergators 18 den Referenzpegel in vorgebbarer Weise überschreitet.

Eine Möglichkeit zur Bildung eines besonders geeigneten Referenzsignales bzw. des Referenzpegels Ref soll nun erläutert werden. Es wird dabei im Mikrorechners 13 der Referenzpegel Ref so festgelegt bzw. normiert, daß sich von leisem zu lautem Geräusch der Brennkraftmaschine ein stetiger Anstieg im normierten Referenzpegel ergibt.

Die Bestimmung des aktuellen Referenzpegels Ref erfolgt beispielsweise nach der Formel:

$$Ref = (F1-1)/F1 \ Refa + 1/F1 \ KI$$

$$Ref = 15/16 \ Refa + 1/16 \ KI$$

In dieser Formel bedeutet:

Ref = Referenzpegel,
Refa = vorheriger Referenzpegel,
KI = Klopfintegral,
F1 = 16 = einstellbarer Faktor.

Zur Bildung des normierten Referenzpegels wird beispielsweise der Referenzpegel mit einem Normierungsfaktor V(i) multipliziert, eine mögliche Formel zur Bildung des normierten Referenzpegels ist:

$$Refn(i) = (8/V(i)) * Ref(i)$$

Es bedeuten dabei:

Refn = normierter Referenzpegel,
Ref = Referenzpegel,
V(i) = Normierungsfaktor für normierten Referenzpegel.

Die Normierung erfolgt wahlweise durch Einstellung der Verstärkungsstufe in Abhängigkeit vom Verstärkungsfaktor. Der Normierungsfaktor weist z.B. Werte von V(i) = 1, 2, 4, 8, 16, 32, 64 auf.

Zur Erkennung der Fehlfunktion der Klopfsensoren oder eines Fehlers in der Auswerteschaltung wird wie in Figur 2 dargestellt ist, ein erlaubtes Referenzpegelband RefB über der Drehzahl n definiert. Weiterhin werden drehzahlabhängig untere und obere Grenzwerte UDKSNU, UDKSNO definiert, die in geeignetem Abstand von den Grenzen des erlaubten Referenzpegelbandes liegen. Dabei wird der Abstand der Grenzen empirisch festgelegt, es kann auch eine fahrzeugspezifische Anpassung erfolgen.

Im Mikrorechner 13 wird laufend überprüft, ob der jeweils ermittelte aktuelle normierte Referenzpegel Refn(i) den unteren oder oberen Grenzwert unter- oder überschreitet. Ist dies der Fall, wird im einfachsten Fall auf Fehler erkannt und es werden vom Mikrorechner geeignete Gegenmaßnahmen wie die Verstellung der Zündung oder eine Gemischanfettung eingeleitet. Die eingeleiteten Sicherheitsmaßnahmen werden bei dieser Fehlererkennung wieder aufgehoben, sobald der aktuelle Referenzpegel wieder innerhalb des Referenzpegelbandes liegt.

Zur Erhöhung der Zuverlässigkeit der Fehlererkennung sind weitere Überprüfungen bzw. Maßnahmen möglich, die im Falle ihrer Nichterfüllung verhindern, daß ein Defekt erkannt wird. Eine dieser Maßnahmen besteht darin, daß die Fehlererkennung erst dann durchgeführt wird, wenn die Drehzahl der Brennkraftmaschine oberhalb einer Grenzdrehzahl nG liegt.

Eine weitere Einschränkung besteht darin, daß zur Fehlererkennung geprüft wird, ob das normierte Referenzsignal Refn(i) für einen bestimmten Zeitraum t1 außerhalb des erlaubten Referenzbandes liegt und die Sicherheitsmaßnahmen nur dann eingeleitet werden wenn diese Bedingung erfüllt ist.

Weiterhin ist möglich, daß die eingeleiteten Sicherheitsmaßnahmen erst dann rückgängig gemacht werden, wenn der aktuelle Referenzpegel wieder für einen weiteren vorgebbaren Zeitraum t2 innerhalb des Referenzpegelbandes RefB liegt.

In einer weiteren Ausgestaltung werden die Sicherheitsmaßnahmen wie die Spätverstellung der Zündung nur dann eingeleitet, wenn vom Mikrorechner 13 festgestellt wird, daß die Klopfregelung aktiv geschaltet ist. Die Fehlererkennung kann dabei jedoch auch erfolgen, wenn diese Bedingung nicht erfüllt ist.

Bei einer Anordnung mit mehreren Klopfsensoren kann der als defekt erkannte Klopfsensor von der Auswertung ausgeschlossen werden und die Klopfregelung nur mittels des als funktionstüchtig erkannten Klopfsensors durchgeführt werden.

In einer weiteren Ausgestaltung werden die Auswirkungen der Klopfregelung abgeschaltet, jedoch bleibt die Klopfregelung zur Fehlerheilung aktiv, auch können abhängig vom erkannten Fehlerzustand die aktuellen Spätverstellungen im Speicher gelöscht werden und die Spätverstellung auf Null gesetzt werden, die Klopfregeladaption ruht dann.

In Figur 2 sind erlaubte Referenzsignalpegel Refpn über der Drehzahl n aufgetragen. Es ist dabei zu erkennen, daß der erlaubte Referenzsignalpegelbereich RefB, der jeweils von einem obersten und einem untersten Referenzsignalpegel begrenzt wird, mit steigender Drehzahl größer wird. Dabei steigt sowohl der minimale erlaubte Referenzpegel als auch der maximal erlaubte Referenzpegel mit steigender Drehzahl an. Insgesamt ist dieser Anstieg jedoch so, daß sich der erlaubte Bereich RefB mit steigender Drehzahl vergrößert. Mit Refpnz ist ein ausgewählter Referenzsignalpegel bezeichnet.

Über dem erlaubten Bereich sowie unter den erlaubten Bereich sind weitere Grenzen UDKSNU, UDKSNO angegeben, die sich entsprechend drehzahlabhängig verändern und als drehzahlabhängige Kennlinien in Speichern des Mikrorechner 13 abgelegt sind. Verändert werden die Grenzen bei Drehzahlen N1, N2, N3, ... Übersteigt der erlaubte Referenzsignalpegel die obere Grenze oder fällt er unter die untere Grenze wird ein Fehler erkannt, wobei wie bereits erläutert gegebenenfalls bestimmte Zeitkriterien mit berücksichtigt werden.

Als Grenzdrehzahl oberhalb der die Fehlererkennung erst aktiv wird, ist in Figur 2 der Wert DNKS eingetragen.

In Figur 3a ist ein Beispiel angegeben, das eine mögliche Vorgehensweise bei der Fehlererkennung verdeutlicht. Die in Figur 3a beschriebene Fehlererkennung läuft üblicherweise im Steuergerät der Brennkraftmaschine, in dem die erforderlichen Rechen-, Speicher- und Zählmittel vorhanden sind, ab.

In Figur 3a ist ein Blockschaltbild angegeben, das zeigt, welche Fehlerabfragen durchgeführt werden und unter welchen Bedingungen letztendlich ein Fehler eingetragen wird bzw. unter welchen Bedingungen eine Fehlerheilung vorgenommen wird. Ein Teil dieser Abfragen wird auch bei der in der PCT/DE 94/01041 beschriebenen Einrichtung zur Fehlererkennung abgefragt. Die Bedingung für die Fehlererkennung sowie den Fehlereintrag, nachdem der Stand des Zündungszählers für die Sperrzeit der Klopfsensordiagnose bei Dynamik verwendet wird, ist jedoch aus der genannten Druckschrift nicht bekannt.

Im einzelnen wird in Figur 3a oben (Fehlereintrag) abgefragt, ob der normierte Referenzpegel Refpnz (entspricht Ref in Figur 2 der PCT/DE 94/01041) größer ist als ein Schwellwert UDKSNO (entspricht UGO), weiterhin wird abgefragt, ob die Motortemperatur TMOT größer ist als ein Schwellwert TMKR, ob die Drehzahl N größer ist als ein Schwellwert NDKS, ob der Stand des Zündungszählers Zdkrsdy größer ist als Null und es wird abgefragt, ob der Sicherheitszähler Xzsen eines der Klopfsensoren, beispielsweise eines der Klopfsensoren 1 bis 4 kleiner ist als ein Schwellwert KRFHKSO. Im Block 30 (UND-Gatter) wird überprüft, ob alle diese Bedingungen erfüllt sind, trifft dies zu, wird im Block 31 der Sicherheitszähler für den betreffenden Klopfsensor um 1 erhöht. Dieser um 1 erhöhte Wert wird beim nächsten Durchlauf wieder mit dem Schwellwert KRFHKSO verglichen und falls er nun gleich ist, wird der Fehlertypmaximalwert erkannt B_maxflr abgegeben.

In der Mitte der Figur 3a sind weitere Abfragen angegeben, es wird dabei abgefragt, ob der normierte Referenzpegel oder einer der vier normierten Referenzpegel (bei 4 Sensoren) Refpn4z kleiner ist als der Wert der unteren Referenzspannungsquelle bzw. des unteren Schwellwertes UDKSNU. Weiterhin wird wieder abgefragt, ob die Motortemperatur TMOT oberhalb einer Schwelle liegt, ob die Drehzahl oberhalb einer Drehzahlschwelle liegt und ob der Zündungszähler gleich Null ist. Zusätzlich wird abgefragt, ob die Bedingung, daß der Sicherheitszähler des betreffenden Klopfsensors kleiner ist, als der Schwellwert KRFHKSU, der die Fehlerhäufigkeit der Klopfsensoren bezüglich ihrer unteren Schwelle charakterisiert.

Wenn alle diese Bedingungen erfüllt sind, wird am Ausgang des Blockes 32 der Sicherheitszähler des betreffenden Klopfsensors um 1 erhöht. Der Wert dieses Sicherheitszählers wird weiterhin darauf überprüft, ob er gleich dem Schwellwert KRFHKSU ist. Ist dies der Fall, wird ein Fehlertyp Minimalwert erkannt und ein entsprechendes Signal B_minflr abgegeben.

Zur Fehlerheilung werden die in Figur 3a unten angegebenen Abfragen durchgeführt. Diese Abfragen sind bereits in den oberen beiden Abfragen der Figur 3a erläutert. Nur wenn die fünf Bedingungen, die Block 34 zugeführt werden, alle erfüllt sind, wird vom Block 34 (UND-Gatter) ein entsprechendes Signal abgegeben. Dieses wird dem UND-Gatter 35 zugeführt. Dem UND-Gatter 35 wird weiterhin ein entsprechendes Signal zugeführt, wenn gilt, daß der Sicherheitszähler des betreffenden Klopfsensors einen Wert größer Null aufweist. Sind beide Eingangsbedingungen des Blockes 35 erfüllt, wird an seinem Ausgang der Inhalt des Sicherheitszählers des betreffenden Klopfsensors um 1 erniedrigt.

Ist dieser Inhalt des Sicherheitszählers gleich Null, wird ein entsprechendes Signal an das UND-Gatter 37 abgegeben. Diesem wird auch das Ausgangssignal des UND-Gatters 34 zugeführt. Sind beide Bedingungen am Eingang des UND-Gatters 37 erfüllt, wird die Diagnosefunktion mit einer "in-Ordnung-Meldung" beendet und ein Signal B_noflr abgegeben.

Mit den in Figur 3a dargestellten Fehlerabfragen bzw. der entsprechenden Fehlerheilung werden die in den Figuren 5 und 6 angegebenen Sperrzeiten nach Last- oder Drehzahldynamik erhalten.

In Figur 3b sind mögliche Zusammenhänge der Fehlerverwaltung aufgezeigt. Es werden dabei die Bedingungen Fehlertyp, Maximalwert erkannt und Fehlertyp Minimalwert erkannt dem ODER-Gatter 40 zugeführt. Der Ausgang des ODER-Gatters 40 ist mit dem Eingang eines RS-Flip-Flops 41 verbunden, dem anderen, nämlich dem R-Eingang des RS-Flip-Flops 41 wird die Bedingung Diagnosefunktion mit in-Ordnung-Meldung beendet zugeführt. Am Ausgang des RS-Flip-Flops 41 wird ein Fehler des betreffenden Klopfsensors erkannt und die Bedingung E_ks (KS) abgegeben.

Die Bedingung Diagnosefunktion mit in-Ordnung-Meldung beendet wird außerdem einem weiteren ODER-Gatter 42 zugeführt, dessen anderem Eingang der Ausgang des ODER-Gatters 40 zugeführt wird. Der Ausgang des ODER-Gatters 42 führt auf ein weiteres RS-Flip-Flop 43, dem zusätzlich noch die Bedingung einer Initialisierung B_ini zugeführt wird. Am Ausgang dieses RS-Flip-Flops wird angezeigt, daß ein Zyklus für einen Klopfsensor abgelaufen ist, es wird ein Zyklusflag Zks(KS) gesetzt.

In Figur 4a ist der Zusammenhang zwischen der Drehzahl N und der Zeit t dargestellt, wobei die Abtastung im 10-Millisekundenraster erfolgt. Weiterhin sind Zählerstände des Dynamikzählers Dynzlr sowie die Auslösebedingung B_dy2, die Bedingung Wdyvh und die Bedingung Dynamikflag 2 gesetzt Dynflg2 in Abhängigkeit von den ausgelösten Zündungen aufgetragen, wobei Dynflg2 gesetzt bedeutet, daß eine hohe Drehzahldynamik erkannt ist.

Die Bedingungen für die Drehzahldynamik lassen sich wie folgt herleiten: Ist die positive Drehzahldifferenz Dndrz, die im 10-Millisekundenraster gebildet wird, mit Werten aus jeweils 100 Millisekunden Zeitdifferenz, größer als die Erkennungsschwelle DNKRDY, so wird der Dynamikzähler Dynzlr auf seinen Startwert AZKRNDYN gesetzt. Es gilt dann die Bedingung B_dy2 gleich 1. Nachdem diese Bedingung B_dy2 auf Null gesetzt wird, wird der Dynamikzähler zündungssynchron bis auf Null dekrementiert. Die Bedingung Dynflg2 gleich 1 liegt vor, solange der Dynamikzähler Dynzlr größer Null ist und die Auslösebedingung B_dy2 gleich 1 war. Auch wenn Dynflg2 gleich 1 ist, kann eine Auslösung der Lastdynamik erfolgen.

Für beide Funktionen Dynflg1 gleich 1 oder Dynflg2 gleich 1 sind während der Zeit Dynzlr größer Null verschiedene Dynamikfunktionen wirksam.

In Figur 4b sind die Bedingungen für die Lastdynamik über der Zeit t aufgetragen. Die Abtastung erfolgt wieder im 10-Millisekundenraster. Im unteren Teil der Figur 4a sind Werte des Dynamikzählers Dynzlr abhängig von erfolgten Zündungen aufgetragen, außerdem wird angegeben, in welchem Zustand 0 oder 1 die Bedingung Dynflg1 bei den dargestellten Laständerungen ist. Ist Dynflg 1 gesetzt (=1), ist eine hohe Dynamik erkannt.

In Figur 5a wird in einem Ausführungsbeispiel aufgezeigt, wie die Sperrzeit nach Last- oder Drehzahldynamik für den Zündungszähler realisiert wird. Die dazu benötigten Bedingungen B_dy1 sowie B_dy2 werden aus der Drehzahldynamik bzw. der Lastdynamik gewonnen. Dabei wird gemäß Figur 5a die invertierte Bedingung B_st sowie die Bedingung Dynflg1 nicht gesetzt dem UND-Gatter 50 zugeführt. Diesem wird außerdem die Information Drehzahländerung Dndrz größer einem Schwellwert DNKRDY zugeführt. Sind diese drei Bedingungen erfüllt, entsteht am Ausgang des Blockes 50 die Bedingung B_dy2. Ob diese Bedingung 0 oder 1 ist, wird weiter ausgewertet.

Aus der Lastdynamik wird der Wert B_dy1 erhalten. Dazu wird die invertierte Bedingung B_st dem UND-Gatter 55 zugeführt. Weiterhin wird die positive Differenz des Drosselklappenwinkelsignales dWdk, die zwischen zwei aufeinanderfolgenden Abtastungen erhalten wird, als Drosselklappenänderungsrate daraufhin geprüft, ob sie oberhalb eines Schwellwertes, nämlich der Dynamikvorhalteerkennungsschwelle DWDKDYN liegt, die ein Maß für die Erkennung der Lastdynamik ist. Diese Information wird ebenfalls dem UND-Gatter 55 zugeführt. Weiterhin wird abgefragt, ob die Motortemperatur Tmot größer ist als eine Schwelle für die Lastdynamikadaption adaptiv und es wird die Information zugeführt, ob der Drosselklappenöffnungswinkel WDK kleiner ist als der maximale Drosselklappenwinkel für die Auslösung der Lastdynamik.

Sind diese Bedingungen alle erfüllt, entsteht am Ausgang des UND-Gatters 55 die Bedingung B_dy1.

Aus B_dy1 und B_dy2 wird die Sperrzeit nach Last- oder Drehzahldynamik für den Zündungszähler ermittelt. Dazu wird überprüft, ob sich die Bedingung B_dy1 von Null auf 1 ändert. Weiterhin wird geprüft, ob sich die Bedingung B_dy2 von Null auf 1 ändert. Die Ergebnisse dieser Prüfung werden einem ODER-Gatter 56 zugeführt und falls eine der Bedingungen erfüllt ist, wird am Ausgang der Zündungszähler für die Sperrzeit der Klopfsensordiagnose bei Dynamik auf den Wert AZDKRS gesetzt. Dieser Wert bezeichnet die Sperrzeit für die Klopfsensordiagnose bei Last- oder Drehzahldynamik (Block 57).

Die Sperrzeit für die Klopfsensordiagnose bei Last- oder Drehzahldynamik wird in Block 58 zündungssynchron dekrementiert, es wird also der Zählerstand bei jeder Zündung um 1 erniedrigt.

Mit dieser Auswertung ist es möglich, daß die Klopfsensordiagnose bei starker Drehzahldynamik oder Lastdynamik unterdrückt wird bzw. daß die entsprechenden Fehlereinschreibungen nicht erfolgen oder das zugehörige Signal nicht weitergeleitet wird.

Ein weiteres Ausführungsbeispiel für die Ermittlung der Sperrzeit aus der Last- oder Drehzahldynamik wird in den Figuren 6a und 6b angegeben. Dabei sind die Teile, die die Bestimmung der Drehzahldynamik betreffen, identisch wie in Figur 5a. Die Bedingungen für die Festlegung der Sperrzeit nach Last- oder Drehzahldynamik sind jedoch unterschiedlich.

Zur Bestimmung der Sperrzeit werden beim Ausführungsbeispiel nach Figur 6a verschiedene Statusabfragen durchgeführt, während beim Ausführungsbeispiel nach Figur 5a Flankensteigungen ausgewertet werden.

Sind die Bedingungen Lastdynamik erkannt, B_dy1 = 1 oder Drehzahldynamik erkannt, B_dy2 = 1, erfüllt, wird der Zündungszähler für Sperrzeit von Klopfsensordiagnose bei Dynamik auf AZDKRS gesetzt, es erfolgt dann eine Sperrung der Diagnose.

Sind die Bedingungen B_dy1 = 0 und B_dy2 = 0, erfolgt eine zündungssynchrone Dekrementierung des Zündungszählers für Sperrzeit KS-Diagnose bei Dynamik.

Das Ausführungsbeispiel nach Figur 6b entspricht weitgehend den nach Figur 5b, zusätzlich erfolgt bei der Bedingung B_dy1 = 0 eine Abregelung des Zählers Dynzlr. Wenn die Dynamikflag Dynflg1 = 0 ist, erfolgt eine Abregelung des Dynamikvorhaltezündwinkels Wdyvh, um "Dynamik"-Klopfen zu vermeiden, mit einer Zündwinkeländerungsbegrenzung ZWB6.

Die Sperrung der Klopfsensordiagnose muß nicht auf positive Last- oder Drehzahländerungen beschränkt sein, es ist auch eine Ausblendung bei negativen dynamischen Vorgängen denkbar. Die Generierung der Lastdynamikbedingung B_dy1 kann auch durch den Gradienten des Drosselklappen/Drehzahl-Ersatzwertes (dtlw) oder der Luftmasse (delta ml) oder des Lastsignales (dtl) erfolgen.

Die bei der Beschreibung der Ausführungsbeispiele genannten Zähler sowie die Bauteile Integrator, Komparator, Flip-Flop etc. können Hardware-Bauelemente sein oder als Softwarefunktionen im Rechner dargestellt werden.

## Patentansprüche

1. Einrichtung zur Fehlererkennung bei einer Vorrichtung zur Klopferkennung bei einer Brennkraftmaschine (21), mit wenigstens einem Klopfsensor (10, 11) und einer diesem nachgeschalteten Auswerteschaltung (12), die die Ausgangssignale des Klopfsensors (10, 11) mit einem variablen Pegel (Ref), der abhängig von den Ausgangssignalen des Klopfsensors (10, 11) gebildet wird, vergleicht und einen Fehler erkennt, wenn der Pegel ein erlaubtes Pegelband (RefB) verläßt, das mit größer werdendem Geräusch der Brennkraftmaschine (21) anwächst, wobei zusätzlich geprüft wird, ob die Dynamik des Ausgangssignals (S1), (S2) des Klopfsensors (10), (11) oder die Dynamik der Drehzahl (N) oder der Last der Brennkraftmaschine (21) größer als ein entsprechender Schwellwert ist und die Diagnosefunktion dann für eine bestimmte Zeit oder für eine bestimmte Anzahl von Zündungen ausgeblendet wird und keine Fehlererkennung erfolgt.

2. Einrichtung nach Anspruch 1, dadurch gekennzeichnet, daß die Dauer der Ausblendung der Diagnosefunktion mittels Zählmitteln (31) festgelegt wird, wobei vorgebbare oder variable Zahlen von Zündungen gezählt werden.

3. Einrichtung nach Anspruch 1 oder 2, dadurch gekennzeichnet, daß ein unterer Drehzahlgrenzwert festgelegt wird und eine Fehlererkennung nur bei Drehzahlen oberhalb dieses Grenzwertes (nG) vorgenommen wird.

4. Einrichtung nach einem der vorhergehenden Ansprüche, dadurch gekennzeichnet, daß die zur Fehlererkennung und zur Ausblendung der Diagnosefunktion erforderlichen Berechnungen im Steuergerät (13) einer Brennkraftmaschine (21) ablaufen.

5. Einrichtung nach einem der vorhergehenden Ansprüche, dadurch gekennzeichnet, daß ein erkannter Fehler in einem Fehlerspeicher eingetragen wird.

## Claims

1. Device for detecting faults in a device for detecting knocking in an internal combustion engine (21), having at least one knock sensor (10, 11) and one evaluation circuit (12) which is connected downstream of the latter and which compares the output signals of the knock sensor (10, 11) with a variable level (Ref) which is formed as a function of the output signals of the knock sensor (10, 11), and detects a fault if the level leaves a committed level band (RefB) which grows as the noise of the internal combustion engine (21) becomes greater, it being additionally tested whether the dynamics of the output signal (S1), (S2) of the knock sensor (10), (11) or of the dynamics of the rotational speed (N) or of the load of the internal combustion engine (21) are greater than a corresponding threshold value and the diagnostic function is then gated out for a specific time or for a specific number of ignitions, and no fault detection takes place.

2. Device according to Claim 1, characterized in that the duration of the gating-out of the diagnostic function is specified by means of counting means (31), predefinable or variable numbers of ignitions being counted.

3. Device according to Claim 1 or 2, characterized in that a lower rotational-speed limiting value is specified and a fault detection is performed only at rotational speeds above this limiting value (nG).

4. Device according to one of the preceding claims, characterized in that the calculations necessary for detecting faults and for gating out the diagnostic function take place in the control unit (13) of an internal combustion engine (21).

5. Device according to one of the preceding claims, characterized in that a detected fault is entered into a fault memory.

## Revendications

1. Système servant à détecter des défauts dans un dispositif de détection de cognements dans un moteur à combustion interne (21), avec au moins un détecteur de cognements (10, 11) et un circuit d'exploitation (12) monté à la suite qui compare les signaux de sortie du détecteur de cognements (10, 11) à un niveau variable (Ref), formé en fonction des signaux de sortie du détecteur de cognements (10, 11), et identifie un défaut quand le niveau quitte une bande de niveau autorisée (RefB) qui croît avec un bruit devenant plus grand du moteur à combustion interne (21) dans lequel

   • on contrôle en plus si la dynamique du signal de sortie (S1), (S2) du détecteur de cognement (10), (11) ou la dynamique de la vitesse de rotation (N) ou de la charge du moteur à combustion interne (21) est plus grande qu'une valeur de seuil correspondante,
   • la fonction du diagnostic est masquée alors pendant un temps déterminé ou pour un nombre déterminé d'allumages, et
   • aucune identification de défaut n'a lieu.

2. Système selon la revendication 1, caractérisé en ce que la durée du masquage de la fonction de diagnostic est déterminée au moyen de moyens de comptage (31) par comptage de nombres d'allumage définis au préalable ou variables.

3. Système selon la revendication 1 ou 2, caractérisé en ce qu' on détermine une valeur inférieure limite de vitesse de rotation et on ne procède à une identification de défaut que pour les vitesses de rotation qui sont au dessus de cette valeur limite (nG).

4. Système selon l'une des revendications précédentes, caractérisé en ce que les calculs, nécessaires à l'identification des défauts et au masquage de la fonction de diagnostic se déroulent dans l'appareil de commande (13) du moteur à combustion interne (21).

5. Système selon l'une des revendications précédentes,
caractérisé en ce qu'
on enregistre un défaut identifié dans une mémoire
de défauts.

EP 0 720 007 B1

FIG.1

FIG.2

9

**Fehlereintrag**

FIG. 3a

**Fehlerverwaltung**

FIG. 3b

EP 0 720 007 B1

Bedingung für Drehzahldynamik : dndrz > DNKRDY

FIG. 4a

Bedingung für Lastdynamik:

dDkpot > DWDKDYN & tmot > TMDYNA & Dkpot < WDKDYMX

FIG.4b

EP 0 720 007 B1

Drehzahldynamik

B_st ———————————┐
dndrz ——→ >DNKRDY ——→ & ╮ 50
Dynflg1 ——————————┘ └——→ B_dy2

B_dy2 ——→ 0→1 ——→ Dynzlr = AZKRNDYN

B_dy2 ————————————————————→ S
                                    └→ Dynflg2
Dynflg1 ——————————→ v ——→ R
Dynzlr ——→ =0 ——→

Sperrzeit nach Last- oder Drehzahldynamik für ADKRS

                                                    (Zündungs-
B_dy1 ——→ 0→1 ──┐                                    zähler)
                 v ──→ Zdkrsdy ──→ Zündungssyn.
B_dy2 ——→ 0→1 ──┘      AZDKRS      Dekrement.
                                    v. Zdkrsdy
              56        57                        58

## FIG. 5a

Lastdynamik

B_st ————————————————————┐
dWdk ——→ >DWDKDYN ——→        ╮ 55
                           &
tmot ——→ >TMDYNA ——→         └——→ B_dy1
Wdk ——→ <WDKDYMX ——→

B_dy1 ——→ 0→1 ——→ Dynzlr=AZKRLDYN ——→ AZKRLDYV ──┐
                                                   & ——→ Wdyvh=
Dynflg1 ———————————————————————————————————————┘      XDynlrn

B_dy1 ————————————————→ S
                              └——→ Dynflg1
Dynzlr ——→ =0 ——→ R

Dynflg1 ——→ 1→0 ——→ Abregelung Wdyvh mit ZWB6

## FIG. 5b

Drehzahldynamik

B_st

dndrz — [>DNKRDY]

Dynflg1

& → B_dy2

B_dy2 — [= 1] → [Dynzlr = AZKRNDYN]

B_dy2

Dynflg1

Dynzlr — [= 0]

v

[S
R] → Dynflg2

B_dy2 — [= 0] → [Abregelung Dynzlr]

Sperrzeit nach Last- oder Drehzahldynamik für ADKRS
(Zündungszähler)

B_dy1 — [= 1]

B_dy2 — [= 1]

v → [Zdkrsdy = AZDKRS]

B_dy1 — [= 0]

B_dy2 — [= 0]

& → [Zündsynchrone
Dekrementierung
von Zdkrsdy]

FIG. 6a

Lastdynamik

B_st

dWdk — [>DWDKDYN]

tmot — [>TMDYNA]

Wdk — [<WDKDYMX]

& → B_dy1

B_dy1 — [= 1] → [Dynzlr = AZKRLDYN] → [AZKRLDYV]

Dynflg1

& → [Wdyvh = XDynlrn]

B_dy1

Dynzlr — [= 0]

[S
R] → Dynflg1

B_dy1 — [= 0] → [Abregelung Dynzlr]

Dynflg1 — [= 0] → [Abregelung Wdyvh mit ZWB6]

FIG. 6b